# EUROPEAN PATENT SPECIFICATION

(11) **EP 3 671 020 B1**
(45) Date of publication and mention of the grant of the patent: **14.10.2026**
(21) Application number: 18213501.2
(22) Date of filing: 18.12.2018
(51) Int. Cl.: F21S 43/239, F21S 43/237, F21S 43/243, F21S 43/249, F21S 43/251, F21S 43/14, F21V 8/00, F21W 103/10

(54) **A VEHICLE LIGHTING SYSTEM**
FAHRZEUGBELEUCHTUNGSSYSTEM
SYSTÈME D'ÉCLAIRAGE DE VÉHICULE

(43) Date of publication of application: 24.06.2020
(73) Proprietor: Ningbo Geely Automobile Research & Development Co. Ltd., Hangzhou Bay New District Ningbo 315336 (CN)
(72) Inventor: HAKE, Joel, 42832 KÅLLERED (SE)
(74) Representative: Zacco Sweden AB

(56) References cited:
- EP-A1- 2 270 389
- EP-A1- 3 655 289
- WO-A1-2016/009733
- DE-A1- 102013 104 169
- DE-A1- 102017 127 663
- FR-A1- 2 934 353
- JP-A- 2017 092 010
- JP-A- 2017 183 231
- US-A- 5 839 813
- US-A1- 2015 277 027

## Description

### TECHNICAL FIELD

The present disclosure relates to a vehicle lighting system comprising one or more light sources, a first light guide, and a second light guide. The one or more light sources are arranged to emit light into the first light guide, and the first light guide is arranged to emit incident light from the one or more light sources into the second light guide. The second light guide is arranged to emit incident light from the first light guide.

### BACKGROUND

Vehicle lighting systems, such as for example taillights and position lights are used on vehicles to meet safety regulations. Often vehicle lights are integrated in the design of the vehicle to achieve an attractive appearance and establish a specific identity of the vehicle, for example through the design of light patterns. Light guides are commonly used in vehicle lighting applications for guiding light from light sources to light emitting surfaces, such as for example taillights, position lights or similar vehicle lighting structures. In today's vehicle applications, there are high demands on the aesthetic appearance and compact design of lighting structures, as well as the light emitting properties needed to meet safety regulations. One common issue when designing a vehicle lighting structure is to achieve an even light pattern in the light emitting surface and to achieve an even light distribution from the light emitting surface when viewed from different angles. This is especially complicated when the light emitting surface has a non-planar configuration. There is thus a need for an improved vehicle lighting system.

Patent publication US 2015/277027 A1 discloses a vehicle lamp including a light emitter, a first light guide, and a second light guide. The first light guide has a first incident surface, a first light guiding portion that guides the entering light, a first light emission surface that emits light guided by the first light guiding portion, and a first reflecting surface that reflects the light guided by the first light guiding portion in a direction toward the second light guide. The second light guide has a second light emission surface that emits light that enters the second light guide after being reflected by the first reflecting surface, and a second reflecting surface that reflects the light that enters the second light guide after being reflected by the first reflecting surface toward the second light emission surface.

### SUMMARY

An object of the present disclosure is to provide a vehicle lighting system where the previously mentioned problems are avoided. This object is at least partly achieved by the features of the independent claims. The dependent claims contain further developments of the vehicle lighting system.

The invention is defined by the appended claims and concerns a vehicle lighting system comprising one or more light sources, a first light guide, and a second light guide. The one or more light sources are arranged to emit light into the first light guide, and the first light guide is arranged to emit incident light from the one or more light sources into the second light guide. The second light guide is arranged to emit incident light from the first light guide. The first light guide is arranged to redirect the incident light from the one or more light sources from a first light flow direction to a second light flow direction. The second light guide is arranged following the first light guide in the second light flow direction. The first light guide comprises a first light input surface arranged to receive the incident light from the one or more light sources, and a first light output surface arranged to emit the light received from the one or more light sources through the first light input surface. A light reflection surface is arranged for internally reflecting the incident light from the first light input surface toward the first light output surface. The second light guide comprises a second light input surface arranged to receive the incident light from the first light guide, and a second light output surface arranged to emit the light received through the second light input surface. The second light output surface comprises a first light emitting surface section in a first plane and a second light emitting surface section in a second plane, wherein the first plane and the second plane are arranged at a first angle in relation to each other. The first angle, α, is in the range 30°<α<180°, preferably 70°<α<160°, and more preferably 110°<α<130°. The first plane and the second plane are arranged at the first angle in relation to each other about a common axis extending in a direction non-parallel to the second light flow direction. The first light guide has a tapered cross-sectional configuration between an upper end and a lower end, and the first light output surface and the light reflection surface are extending between the upper end and the lower end. The first light output surface is arranged at a second angle in relation to the light reflection surface.

Advantages with these features are that the vehicle lighting system can be made in a compact design meeting safety regulations with a configuration where the first plane and the second plane are arranged at a first angle in relation to each other. Further, the first angle is providing an attractive appearance of the vehicle lighting system establishing a specific identity of the vehicle and meeting high demands on the aesthetic appearance of the lighting structure. The construction of the first light guide in combination with the second light guide is establishing an even light pattern in the second light emitting surface and an even light distribution without visible light intensity fluctuations from the light emitting surface when viewed from different angles. The arrangement of the planes at the first angle is establishing the specific identity of the vehicle meeting high demands on the aesthetic appearance of the lighting structure and establishing an efficient light pattern meeting safety demands. The second angle is configuring the first light guide with a wedge shape providing an efficient reflection of light within the first light guide.

According to another aspect of the disclosure, the first light output surface is arranged in a light output plane and the second light input surface is arranged in a light input plane, wherein a gap is formed between the first light output surface and the second light input surface. The gap is supporting the light distribution between the first light guide and the second light guide for an efficient light flow with an even light distribution without major fluctuations.

According to an aspect of the disclosure, the gap has a smallest dimension between the first light output surface and the second light input surface in the second light flow direction Y within the range 0.1-20 mm.

According to another aspect of the disclosure, the light output plane and the light input plane are arranged parallel or essentially parallel to each other. The configuration with parallel planes are providing an efficient light distribution between the first light guide and the second light guide. The parallel surfaces are allowing the redirected light from the first light guide to be efficiently emitted into the second light guide.

According to a further aspect of the disclosure, the light output plane and the light input plane are arranged perpendicular or essentially perpendicular to the second light flow direction. The arrangement of the light output plane and the light input plane in a perpendicular relationship is providing a simple design of the system with right angles. The angular relationship is further supporting the compact design of the system.

According to another aspect of the disclosure, the first light input surface is arranged at the upper end, and wherein the first light input surface is arranged at a third angle in relation to the first light output surface. The design with the first light input surface at the upper end is establishing a simple construction where the light sources are arranged above the first light guide. The third angle is establishing the angular relationship between the first light input surface and the first light output surface, and further the relationship between the first input surface and the light reflection surface when the second angle is known.

According to a further aspect of the disclosure, the light reflection surface comprises a plurality of grooves arranged to redirect the incident light from the one or more light sources, wherein the grooves are arranged between the upper end and the lower end in a parallel or essentially parallel relationship to the first light input surface.

According to an aspect of the disclosure, each groove has a V-shaped configuration comprising a first groove angle and a second groove angle. The V-shaped configuration is efficiently reflecting the light in the first light guide.

According to another aspect of the disclosure, the light reflection surface comprises two or more light reflection sections, wherein the grooves in the respective light reflecting sections have different configurations. The light reflection sections are providing an even more efficient reflection of light emitted from the one or more light sources, since the grooves may have different angles, sizes or individual relationships. Through the light reflection sections, the light emitted from the first light guide can be made more even and controlled, where an even light pattern in the first light emitting surface and an even light distribution without major fluctuations is achieved.

According to a further aspect of the disclosure, the area of the first light output surface is greater than the area of the second light input surface. The relationship between the areas is securing an efficient distribution of light into the second light guide from the first light guide.

According to an aspect of the disclosure, the first input surface comprises one or more lenses arranged to direct the light emitted from the one or more light sources into the first light guide, wherein each of the one or more light sources is cooperating with one of the one or more lenses. The one or more lenses are establishing a directed light into the first light guide for an efficient utilization of light emitted from the one or more light sources.

According to another aspect of the disclosure, the first light emitting surface section comprises a first prism pattern, and the second light emitting surface section comprises a second prism pattern, wherein the respective first and second prism patterns are arranged to direct the light emitted from the second light guide. The prism patterns are used to direct the light emitted from the first light emitting surface section in the first plane and the second light emitting surface section in the second plane that are arranged in relation to each other in an angular relationship. Through the use of prism patterns the emitted light from the second light guide can be emitted into desired directions.

According to an aspect of the disclosure, the first light guide is arranged following the one or more light sources in the first light flow direction.

According to another aspect of the disclosure, the first light output surface comprises a graining structure. The graining structure is securing a more even light distribution.

### BRIEF DESCRIPTION OF DRAWINGS

The disclosure will be described in greater detail in the following, with reference to the attached drawings, in which
- Fig. 1a-b: show schematically, in a perspective view and in a side view a vehicle lighting system with a first light guide and a second light guide according to the disclosure,
- Fig. 2a-b: show schematically, in perspective views the second light guide of the vehicle lighting system according to the disclosure,
- Fig. 3: shows schematically, in a side view the second light guide of the vehicle lighting system according to the disclosure,
- Fig. 4a-c: show schematically, in perspective views the first light guide of the vehicle lighting system according to the disclosure,
- Fig. 5: shows schematically, in a side view the first light guide of the vehicle lighting system according to the disclosure, and
- Fig. 6: shows schematically, in a perspective view an alternative embodiment of the first light guide according to the disclosure,
- Fig. 7a-b: show schematically, in a perspective view and in a side view a lens of the first light guide according to the disclosure, and
- Fig. 8: shows schematically, in a perspective view an example embodiment of the first light guide of the vehicle lighting system according to the disclosure.

### DESCRIPTION OF EXAMPLE EMBODIMENTS

Various aspects of the disclosure are hereinafter described in conjunction with the appended drawings to illustrate and not to limit the disclosure, wherein like designations denote like elements, and variations of the described aspects are not restricted to the specifically shown embodiments, but are applicable on other variations of the disclosure.

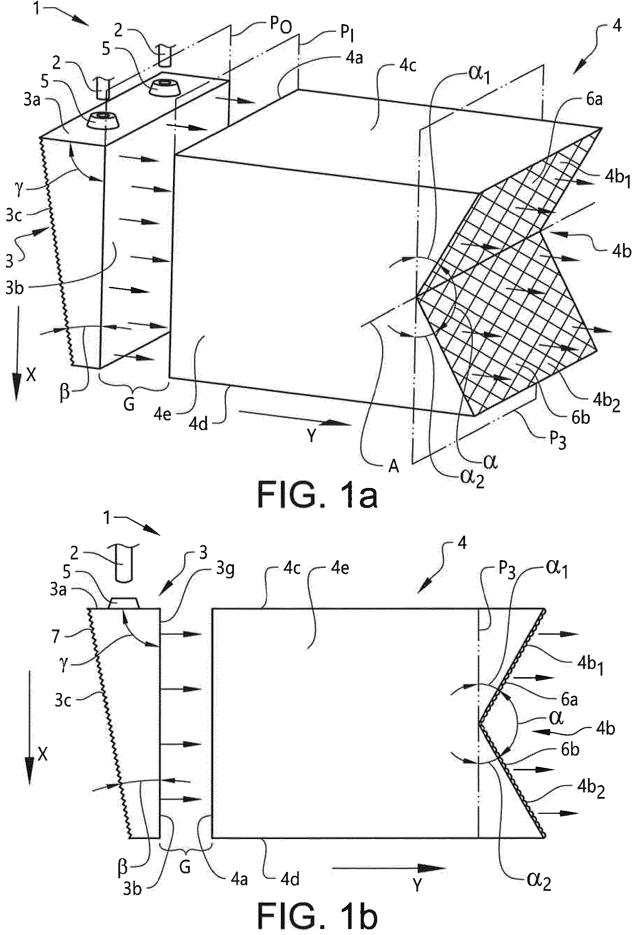

In figures 1a-b a vehicle lighting system 1 is schematically shown. The vehicle lighting system 1 comprises one or more light sources 2, a first light guide 3, and a second light guide 4. The one or more light sources 2 are arranged to emit light into the first light guide 3, and the first light guide 3 is arranged to emit incident light from the one or more light sources 2 into the second light guide 4. The second light guide 4 is arranged to emit incident light from the first light guide 3.

The light sources 2 may be any suitable light sources for vehicle applications, such as for example light-emitting diodes (LED) having a low energy consumption, a long lifetime and a robust construction. In figures 1a-b , two light sources 2 are shown, but the lighting system may alternatively comprise only one light source 2 or three or more light sources 2 depending on the design of the vehicle lighting system 1.

As illustrated in figures 1a-b , the first light guide 3 is arranged to redirect the incident light from the one or more light sources 2 from a first light flow direction X to a second light flow direction Y. The second flow direction Y is arranged at an angle in relation to the first flow direction X. The first light guide 3 is arranged following the one or more light sources 2 in the first light flow direction X. The first light guide 3 is designed and configured so that an even light distribution of the light emitted from the one or more light sources 2 is achieved. The first light guide 3 comprises a first light input surface 3a and a first light output surface 3b. The first light input surface 3a is arranged to receive the incident light from the one or more light sources 2. The first light output surface 3b is arranged to emit the light received from the one or more light sources 2 through the first light input surface 3a.

As shown in figure 1a, the first light output surface 3b is arranged in a light output plane P_{O}, and the light output plane P_{O} is used for defining the second light flow direction Y, wherein the second light flow direction Y is a direction perpendicular to the light output plane P_{O}. The first light flow direction X is a direction of the light entering the first light guide 3 through the first light input surface 3a from the one or more light sources 2. It should be understood that light emitted from the one or more light sources are emitted not only in one single direction, but in different directions within a light emission angle or viewing angle of the light source. Different light sources are having different radiation patterns, and an example of a typical radiation pattern for a light emitting diode (LED) is where most of the energy is emitted within 20° of the direction of maximum light. A maximum light direction for a light source may for example be used to define the first light flow direction X. Different types of light emitting diodes may be used for the one or more light sources 2, and suitable light emitting diodes used in the automotive industry may typically have viewing angles of 60° and/or 120°.

As illustrated in figures 1a-b , the second light guide 4 is arranged following the first light guide 3 in the second light flow direction Y. The second light guide 4 is designed and configured to emit light from a light emitting output surface with an even light pattern and with an even light distribution when viewed from different angles, without any visible light intensity fluctuations. The second light guide 4 comprises a second light input surface 4a and a second light output surface 4b. The second light input surface 4a is arranged to receive the incident light from the first light guide 3. The second light output surface 4b is arranged to emit the light received through the second light input surface 4a.

Through the configuration of the vehicle lighting system 1, with the first light guide 3 and the second light guide 4, the light emitted from the one or more light sources 2 into the first light guide is distributed through the first light guide 3 and through the second light guide 4 to the second light output surface 4b. The second light output surface 4b thus constitutes a light emitting output surface of the vehicle lighting system through which light is emitted to the surrounding environment in for example a taillight, a position light or other vehicle lighting structure. The light emitted from the one or more light sources 2 is redirected from the first light flow direction X to the second light flow direction Y in the first light guide 3, and through the redirection of light flow, a compact design of the vehicle lighting structure 1 is enabled.

In the embodiments shown in the figures, the first light flow direction X is arranged at about a 90° angle in relation to the second light flow direction Y. However, it should be understood that the first light guide 3 may be arranged to redirect the incident light in other angles than about 90° between the first light flow direction X and the second light flow direction Y. The first light flow direction X and the second light flow direction Y may be arranged in any desired angular relationship relatively each other, and the angle may be different for different designs of the vehicle lighting system 1.

As shown in figures 1a-b , the first light output surface 3b is arranged in the light output plane P_{O} and the second light input surface 4a is arranged in a light input plane P_{I}. A gap G is formed between the first light output surface 3b and the second light input surface 4a. The gap G between the first light output surface 3b and the second light input surface 4a is used for securing an even light distribution from the first light guide 3 to the second light guide 4.

In the embodiment shown in figures 1a-b , the light output plane P_{O} and the light input plane P_{I} are arranged parallel or essentially parallel in relation to each other for an efficient light distribution. Thus, in this embodiment, both the light output plane P_{O} and the light input plane P_{I} are arranged perpendicular or essentially perpendicular to the second light flow direction Y. To secure an efficient distribution of light into the second light guide 4 from the first light guide 3, the area of the first light output surface 3b can be made greater than the area of the second light input surface 4a, and the first light output surface 3b and the second light input surface 4a may be suitably arranged in an overlapping relationship. If desired, the light output plane P_{O} and the light input plane P_{I} may be arranged so that they are non-parallel in relation to each other.

The size of the gap G formed between the first light output surface 3b and the second light input surface 4a may be different depending on the design of the vehicle lighting system 1. In the embodiment shown in figures 1a-b , the gap G has an extension in the second light flow direction Y between the first light output surface 3b and the second light input surface 4a. Depending on the orientations of the light output plane P_{O} and the light input plane P_{I}, the gap G has a smallest dimension between the first light output surface 3b and the second light input surface 4a. If, as illustrated in the figures, the light output plane P_{O} and the light input plane P_{I} are arranged parallel to each other the gap G has a constant width in the second light flow direction Y between the first light output surface 3b and the second light input surface 4a. Test have shown that a suitable size of the gap G is when the gap G has a width in the second light flow direction Y with a smallest dimension between the first light output surface 3b and the second light input surface 4a within the range 0.1-20 mm. With a smallest dimension is in this context meant the smallest distance in the second light flow direction Y between the first light output surface 3b and the second light input surface 4a.

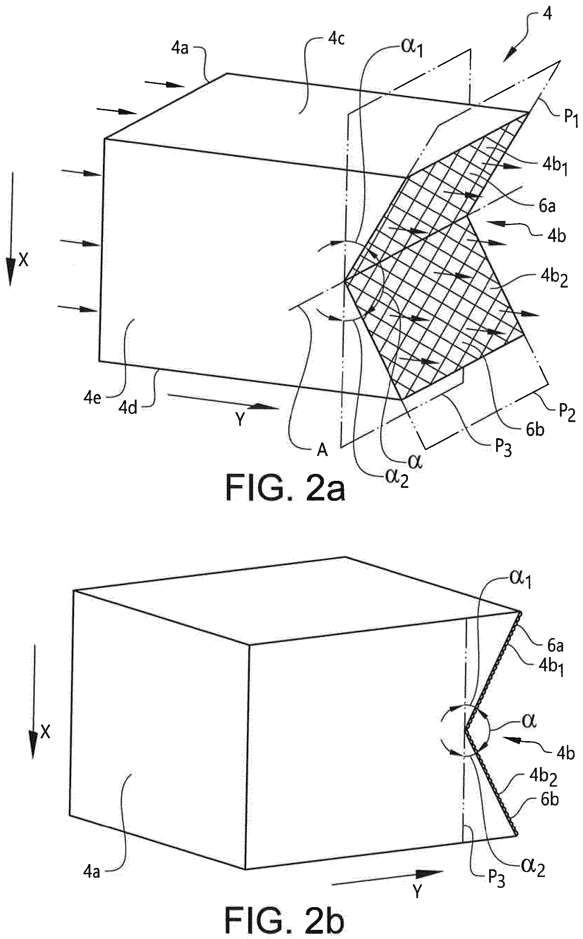

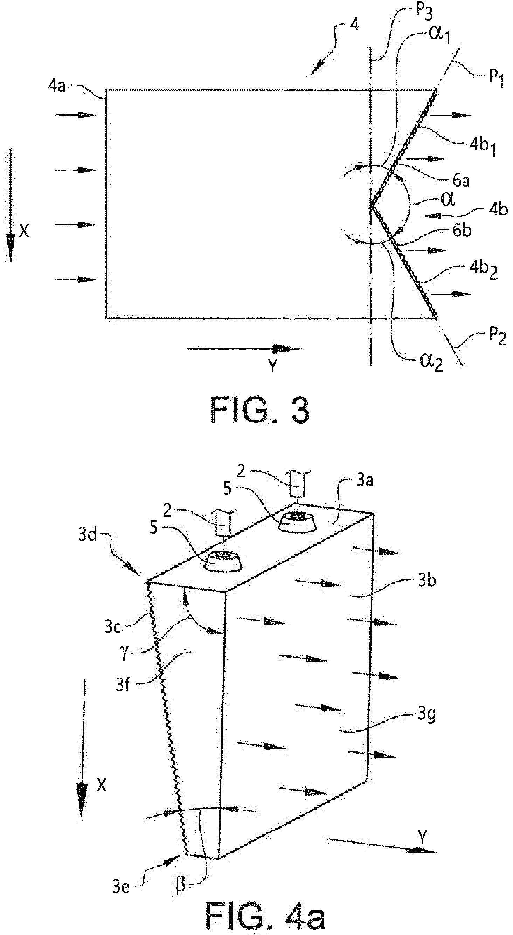

As shown in figures 2a-b and figure 3, the second light guide 4 comprises the second light input surface 4a arranged to receive the incident light from the first light guide 3, and the second light output surface 4b arranged to emit the light received through the second light input surface 4a. The second light output surface 4b comprises a first light emitting surface section 4b₁ in a first plane P₁ and a second light emitting surface section 4b₂ in a second plane P₂. The first plane P₁ and the second plane P₂ are arranged at a first angle α in relation to each other. The arrangement of the first light emitting surface section 4b₁ and the second light emitting surface section 4b₂ in an angular relationship in different planes are providing an efficient light distribution from the light emitting surface when viewed from different angles. Through the arrangement of the planes in the second light emitting surface 4b, an attractive aesthetic and characteristic appearance of the vehicle lighting system 1 is achieved, compared to a more simple construction with a flat surface. The first angle α may be varied depending on the design of the first light guide 3, wherein according to the invention the first angle α is in the range 30°<α<180°, preferably 70°<α<160° and more preferably 110°<α<130°. The first plane P₁ and the second plane P₂ are arranged at the first angle α in relation to each other about a common axis A. The common axis A is extending in a direction non-parallel to the second light flow direction Y.

The second light guide 4 further comprises an upper surface 4c, a lower surface 4d, and two side surfaces 4e. Upper and lower are in this context referring to the orientation of the surfaces as illustrated in figures 2a-b and figure 3. It should be understood that the surfaces may be oriented in other ways if desired. The upper surface 4c, the lower surface 4d, and the two side surfaces 4e are arranged as planar surfaces parallel to the second light flow direction Y. However, the upper surface 4c, the lower surface 4d, and the two side surfaces 4e may have different shapes, and may be arranged as non-planar surfaces arranged in directions non-parallel to the second light flow direction Y. If suitable, the upper surface 4c, the lower surface 4d, and the two side surfaces 4e may be masked or hidden in a vehicle lighting construction.

The first plane P₁ is arranged at a first plane angle α₁ in relation to a third plane P₃ arranged in a perpendicular relationship to the second light flow direction Y, and the second plane P₂ is arranged at a second plane angle α₂ in relation to the third plane P₃, as shown in figure 2a and figure 3. The first plane angle α₁ and the second plane angle α₂ may have the same value or alternatively different values depending on the design of the vehicle lighting system 1. Suitable values for the first plane angle α₁ is in the range 0°< α₁<90°, and suitable values for the second plane angle α₂ is in the range 0°< α₂<90°.

As a non-limiting example, the second light guide 4 may have a configuration where the first angle α is 120°, the first plane angle α₁ is 32°, and the second plane angle α₂ is 28°.

To secure the emission of light from the second light output surface 4b in the correct directions, the first light emitting surface section 4b₁ comprises a first prism pattern 6a, and the second light emitting surface section 4b₂ comprises a second prism pattern 6b. The respective first prism pattern 6a and second prism pattern 6b are arranged to direct the light emitted from the second light guide 4. Since the first light emitting surface section 4b₁ and the second light emitting surface section 4b₂ are arranged non-parallel to the second light flow direction, the first prism pattern 6a and the second prism pattern 6b are used for directing the emitted light into desired directions with desired light distributions. The first prism pattern 6a may have any suitable configuration and comprises a plurality of shaped prisms arranged next to each other throughout the surface of the first light emitting surface section 4b₁. The second prism pattern 6b may have any suitable configuration and comprises a plurality of shaped prisms arranged next to each other throughout the surface of the second light emitting surface section 4b₂. The first prism pattern 6a may be similar or identical to the second prism pattern 6b, or alternatively, the first prism pattern 6a may be different from the second prism pattern 6b depending on the design of the vehicle lighting system 1. The first prism pattern 6a and the second prism pattern 6b may as an example be configured with a number of individual square prisms when viewed in the second light flow direction Y, where the individual prisms are provided with rounded outer sections. Each side of the squares may have, as an example, a dimension in the range 0.3-10 mm. Smaller dimensions than 0.3 mm may also be used, but dimensions above 0.3 mm are easier and more cost efficient to manufacture. The prism patterns may also have other shapes and designs than square to direct the light in desired directions. The prism patterns are providing a configuration of the vehicle lighting system, where the first light emitting surface section 4b₁ and the second light emitting surface section 4b₂ may be perceived as illuminated surfaces by a viewer. The light emitted from the one or more light sources 2 is visible by the viewer from different directions and angles through the optical pattern provided by the prism patterns of the first light emitting surface section 4b₁ and the second light emitting surface section 4b₂. However, the one or more light sources 2 as such are not visible due to the configuration with the two light guides and the prism patterns.

The second light guide 4 may be made of any suitable material, such as for example polymethyl methacrylate (PMMA), polycarbonate (PC), a mix of polycarbonate (PC) and acrylonitrile butadiene styrene (ABS), or any other suitable plastic or other material having transparent properties.

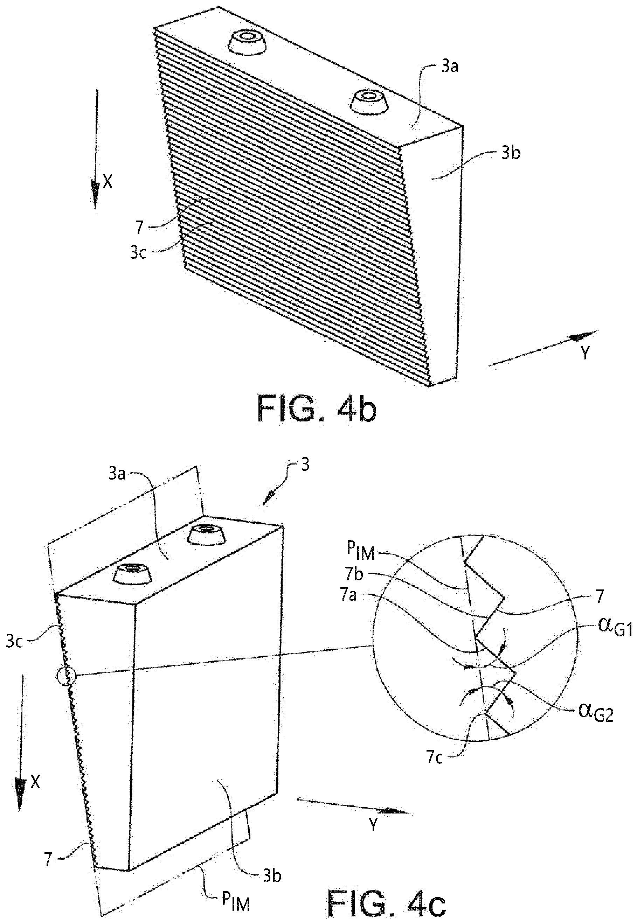

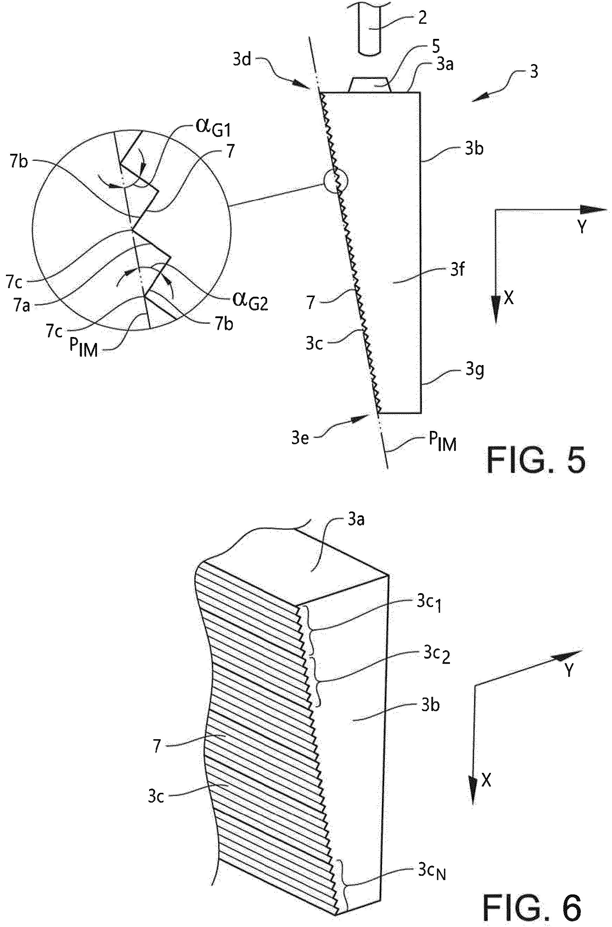

As shown in figures 4a-c and figure 5, the first light guide 3 comprises the first light input surface 3a arranged to receive the incident light from the one or more light sources 2. The first light input surface 3a may have a planar configuration or an essentially planar configuration provided with light inlets for the one or more light sources 2. The first light guide 3 further comprises the first light output surface 3b arranged to emit the light received from the one or more light sources 2 through the first light input surface 3a. The first light output surface 3b may have a planar configuration or an essentially planar configuration for an even light distribution. A light reflection surface 3c is arranged for internally reflecting the incident light from the first light input surface 3a toward the first light output surface 3b. Through the reflection of incident light on the light reflection surface 3c the light is redirected from the first light flow direction X to the second light flow direction Y.

The first light guide 3 further comprises an upper end 3d, a lower end 3e, and two side surfaces 3f. Upper and lower are in this context referring to the orientation of the surfaces as illustrated in figures 4a-c and figure 5. It should be understood that the surfaces may be oriented in other ways if desired. The two side surfaces 3f are arranged as planar surfaces parallel to the second light flow direction Y. However, the two side surfaces 3f may have different shapes, and may be arranged as non-planar surfaces arranged in directions non-parallel to the second light flow direction Y.

The first light guide 3 has a tapered cross-sectional configuration, with a tapering extension between the upper end 3d and the lower end 3e. The first light output surface 3b and the light reflection surface 3c are extending between the upper end 3d and the lower end 3e, and as shown in figures 4a-c and figure 5 the first light output surface 3b is arranged at a second angle β in relation to the light reflection surface 3c. The second angle β is selected to establish an efficient and even light distribution of the light emitted through the first light output surface 3b. The second angle β may be varied depending on the design of the first light guide 3, and suitable second angles β are for example in the range 0°<β<10°.

As further shown in figures 4a-c and figure 5 the first light input surface 3a is arranged at the upper end 3d. The first light input surface 3a is arranged at a third angle γ in relation to the first light output surface 3b. The third angle γ may be varied depending on the design of the first light guide 3, and suitable third angles γ may for example be in the range 70°<γ<110°, preferably 90°.

As illustrated in figure 1b and figure 5, the first light output surface 3b may for example comprise a graining structure 3g or other surface finish layer for a more even light distribution. The graining structure 3g may be of any suitable texture or coarseness. If the first light guide 3 is made of a suitable plastic material, the graining of the first light output surface 3b can be measured for example according to the VDI 3400 standard. The graining structure 3g can be achieved when moulding the first light guide 3, and the mould used is then prepared with a suitable graining structure.

The light reflection surface 3c comprises a plurality of grooves 7 extending into the first light guide 3. The plurality of grooves are arranged to redirect the incident light from the one or more light sources 2, as illustrated in figure 5. The grooves 7 are arranged between the upper end 3d and the lower end 3e in a parallel or essentially parallel relationship to the first light input surface 3a. Each groove 7 has a V-shaped configuration comprising a first groove angle α_{G1} and a second groove angle α_{G2}, as illustrated more in detail in figure 4c. The groove angles are chosen so that an efficient reflection of the incident light from the one or more light sources 2 is achieved. The design and angles of the grooves 7 may be varied depending on the design of the first light guide 3. Each groove 7 is defined as an inwardly oriented V-shaped groove extending into the first light guide, where each groove 7 has an upper groove side 7a and a lower groove side 7b. Upper and lower are in this context referring to the orientation of the first light guide embodiment as illustrated in figure 5. It should be understood that the first light guide may be oriented in other directions if desired. The first groove angle α_{G1} and the second groove angle α_{G2} are calculated as the respective angles from an imaginary plane P_{IM} to the upper groove side 7a and the lower groove side 7b respectively. The imaginary plane P_{IM} is extending along the light reflection surface 3c. The imaginary plane P_{IM} is, as shown in figure 5, a plane arranged at outer groove connection points 7c of the grooves 7. The outer groove connection points 7c are arranged between the upper groove sides 7a and the lower groove sides 7b of the grooves 7. The outer groove connection points 7c are thus connecting outer portions of each groove 7, where the outer groove connection point 7c is connecting the upper groove side 7a and lower groove side 7b of each groove 7. In the embodiments shown, the grooves 7 are arranged directly adjacent each other. However, the grooves 7 may as an alternative (not shown in the figures) be arranged at a suitable distance from each other, where the outer groove connection points 7c are arranged as wall sections of the light reflecting surface 3c interconnecting the grooves 7. Tests have shown that for a first light guide 3 made of PMMA, where the second angle β is greater than 0° and smaller than 10°, suitable first groove angles α_{G1} are as a non-limiting example in the range 30° to 45°, and suitable second groove angles α_{G2} are as a non-limiting example in the range 30° to 45°. These first and second groove angles may also be suitable for other materials. The grooves 7 arranged on the light reflection surface 3c may be configured with the same groove angles or alternatively the grooves 7 may have different groove angles.

As illustrated in figure 6a, the light reflection surface 3c of the first light guide 6 may comprise two or more light reflection sections 3c₁, 3c₂ ... 3c_{N}. Each of the two or more light reflection sections 3c₁, 3c₂ ... 3c_{N} comprises a plurality of grooves 7 arranged to redirect the incident light from the one or more light sources 2. The grooves 7 of each light reflection section 3c₁, 3c₂ ... 3c_{N} are arranged between an upper end 3d₁, 3d₂ ... 3d_{N} and a lower end 3e₁, 3e₂ ... 3e_{N} in a parallel or essentially parallel relationship to the first light input surface 3a. Each groove 7 has a V-shaped configuration comprising a first groove angle α_{G1} and a second groove angle α_{G2}. The groove angles are chosen so that an efficient reflection of the incident light from the one or more light sources 2 is achieved. The design and angles of the grooves 7 may be varied depending on the design of the first light guide 3. The grooves 7 in each light reflection section 3c₁, 3c₂ ... 3c_{N} may have configurations different from grooves 7 in other light reflection sections. The shape and groove angles may differ between the light reflection sections 3c₁, 3c₂ ... 3c_{N}. Further, the number of grooves in each light reflection section 3c₁, 3c₂ ... 3c_{N} may vary depending on the design of the first light guide 3.

As shown in the figures, the first input surface 3a of the first light guide 3 may comprise one or more lenses 5 arranged to direct the light emitted from the one or more light sources 2 into the first light guide 3. The first input surface 3a may be provided with one lens 5 for each light source 2. The lenses 5 are arranged to direct and distribute the light emitted from the one or more light sources 2 in a suitable manner into the first light guide 3 in order to achieve a desired first light flow direction X and reflection within the first light guide 3. The more light reflected on the light reflection surface 3c, the better light output is accomplished through the first light output surface 3b. Each of the one or more light sources 2 is cooperating with one of the one or more lenses 5, and thus the first light guide 3 may be provided with one lens 5 for each light source 2. In the embodiment shown in figures 4a-b and figure 5 the first light guide 3 comprises two lenses 5, one lens 5 for each of the two light sources 2. The lenses may be configured in different ways depending on the design of the first light guide.

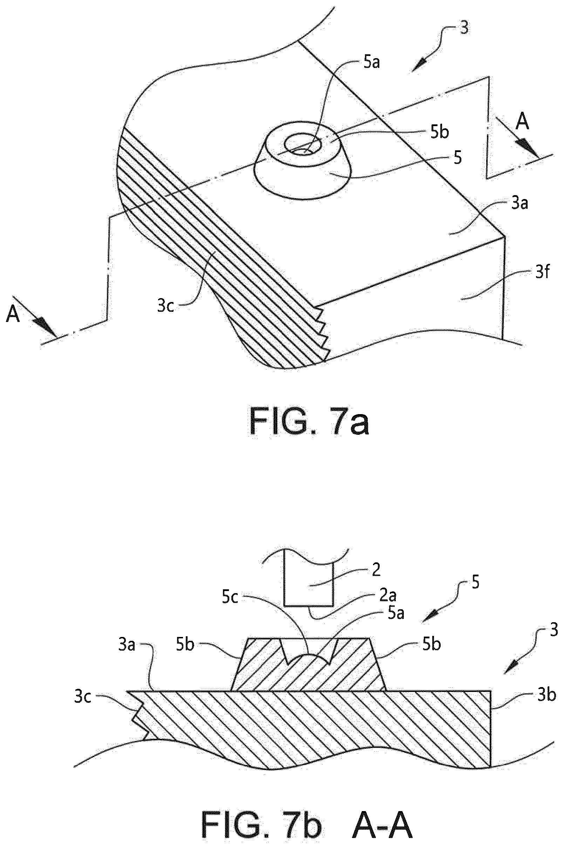

A suitable configuration of the one or more lenses 5 are for example shown in figures 7a-b. The one or more lenses 5 may be attached as separate elements to the first light input surface 3a or alternatively be moulded into the structure of the first light guide 3. Each lens 5 may comprise a curved lens surface 5a surrounded by a lens sidewall 5b. The lens surface 5a is, as shown in the figures, having a convex shape and the light source 2 is arranged in a direction above the lens surface 5a. The lens surface 5a has a lens top surface centre point 5c, and a light source centre point 2a of the light source 2 is arranged in the first flow direction X above the lens top surface centre point 5c. The distance between the light source centre point 2a and the lens top surface centre point 5c in the first flow direction X may vary depending on the design of the first light guide 3, and may for example be in the range 0.1-20 mm.

The first light guide 3 may be made of any suitable material, such as for example polymethyl methacrylate (PMMA), polycarbonate (PC), a mix of polycarbonate (PC) and acrylonitrile butadiene styrene (ABS), or any other suitable plastic or other material having transparent properties.

The vehicle lighting system 1 can through the construction of the first light guide 3 and the second light guide 4 be scalable in size. Through the scalability of the vehicle lighting system 1 the dimensions of the first light guide 3 and the second light guide 4 may be varied, and further the number of light sources 2 used may differ between different vehicle lighting systems 1. The distance between the light sources 2 can be varied to alter the intensity of the light emitted from second light output surface 4b. The more the light sources 2 are separated, the higher risk for an uneven light pattern in the second light output surface 4b. Further, if the light sources are arranged too close to each other the vehicle lighting system 1 may not be energy efficient enough. A narrow system may only need one light source 2 and wider vehicle lighting systems may need two or more light sources 2.

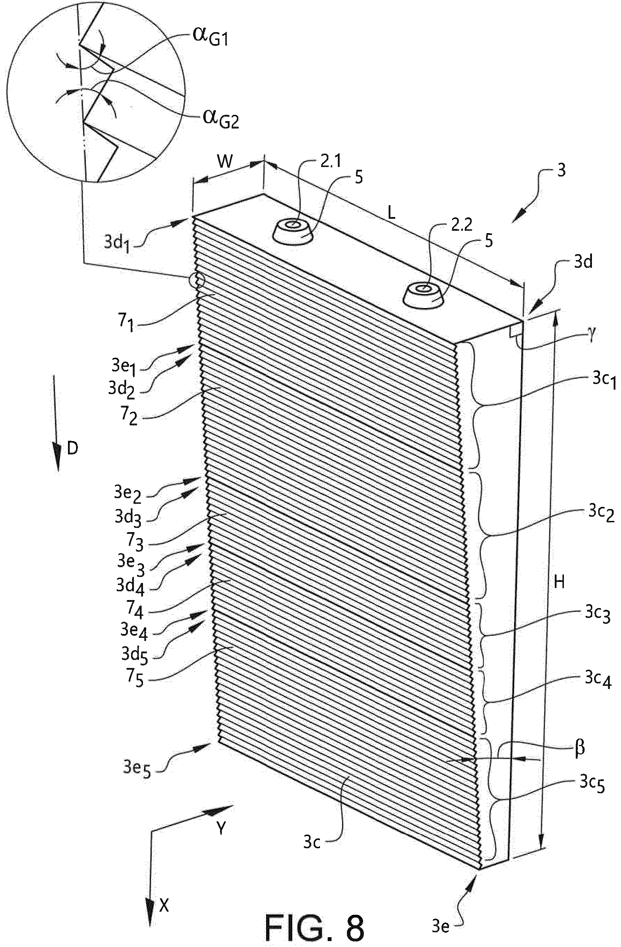

To achieve an even light distribution with an even light pattern in the first light guide 3, the suitable number of light sources 2 used are depending on the surface area of the first light output surface 3b. The larger area of the first light output surface 3b, the higher number of light sources 2 may be used. The first light guide 3 may for example have a tapered configuration as shown in figure 8, with a height H measured in the first flow direction X, a width W measured in the second flow direction Y, and a length L measured in a direction perpendicular to the first flow direction X and the second flow direction Y. The length L may for example be varied to achieve different surface areas of the first light output surface 3b. If for example, a predetermined height H is used in a light guide configuration and the length L is varied for different designs of the first light guide 3, the number of light sources used to achieve desired properties are depending on the length L.

If in a non-limiting example, the height H is predetermined to a specific value, and the surface area of the first light output surface 3b is 10 cm², only one light source may be used to achieve desired light distribution properties. If the length L is increased for the same predetermined height H so that the surface area is 20 cm², two light sources 2 may be used to achieve desired light distribution properties. However, tests have shown that if increasing the length L further, the relationship between the number of light sources 2 and the length L is not necessarily linear in order to achieve desired light distribution properties. If for example the length L is even further increased for the same predetermined height H so that the surface area is 40 cm², only three light sources 2 may be needed to achieve desired light distribution properties instead of using four light sources 2. The use of four light sources 2 may lead to unnecessary light intensities and higher costs for the additional light source used.

An example embodiment of the first light guide 3 will be described below with reference to figure 8. In this example, the first flow direction X is perpendicular to the second flow direction Y. The first light guide 3 is made of polymethyl methacrylate (PMMA), and has a height H measured in the first flow direction X of about 100 mm, a width W measured in the second flow direction Y of about 11 mm, and a length L measured in a direction perpendicular to the first flow direction X and the second flow direction Y of about 37 mm. In this example embodiment, the second angle β is 5°, and the third angle γ is 90°.

In the example embodiment in figure 8, two light sources 2.1, 2.2 are used to emit light into the first light guide 3. The first light guide 3 comprises five light reflection sections 3c₁, 3c₂, 3c₃, 3c₄, 3c₃, extending along the light reflection surface 3c from the upper end 3d to the lower end 3e of the first light guide 3. Each of the five light reflection sections 3c₁, 3c₂, 3c₃, 3c₄, 3c₅ comprises a plurality of grooves 7 arranged to redirect the incident light from the two light sources 2.1, 2.2. In the same way as illustrated in figure 6b, the grooves 7 of each light reflection section 3c₁, 3c₂, 3c₃, 3c₄, 3c₅ are arranged between an upper end 3d₁, 3d₂, 3ds, 3d₄, 3d₅ and a lower end 3e₁, 3e₂, 3e₃, 3e₄, 3e₅ of each light reflection section 3c₁, 3c₂, 3c₃, 3c₄, 3c₅ in a parallel or essentially parallel relationship to the first light input surface 3a. The grooves 7 in each light reflection section 3c₁, 3c₂, 3c₃, 3c₄, 3c₅ have configurations different from grooves 7 in other light reflection sections.

As illustrated in figure 8, the first light reflection section 3c₁ comprises a first set of grooves 7₁. The first light reflection section 3c₁ is extending from the upper end 3d of the first light guide 3 and a distance of about 25% of the total extension of the light reflection surface 3c in a downwards direction D between the upper end 3d and the lower end 3e of the first light guide 3. Each groove 7₁ in the first light reflection section 3c₁ has a V-shaped configuration with a first groove angle α_{G1} and a second groove angle α_{G2}. The first groove angle α_{G1} and the second groove angle α_{G2} are chosen so that an efficient reflection of the incident light from the two light sources 2.1, 2.2 is achieved. In the first light reflection section 3c₁, the first groove angles α_{G1} are ranging from 30° to 38°, and the second groove angles α_{G2} are 40°. The first groove angles α_{G1} are gradually changed between the upper end 3d₁ and the lower end 3e₁ of the first light reflection section 3c₁. A first groove arranged closest to the upper end 3d₁ has a first groove angle α_{G1} of 30°. A last groove arranged closest to the lower end 3e₁ has a first groove angle α_{G1} of 38°. Each groove 7₁ in the first light reflection section 3c₁ has an extension in the downwards direction D along the first light reflection section 3c₁ from the upper end 3d₁ to the lower end 3e₁ of about 1.4 mm.

As illustrated in figure 8, the second light reflection section 3c₂ comprises a second set of grooves 7₂. The second light reflection section 3c₂ is extending from the lower end 3e₁ of the first light reflection section 3c₁ and a distance of about 25% of the total extension of the light reflection surface 3c in the downwards direction D towards the lower end 3e of the first light guide 3. Each groove 7₂ in the second light reflection section 3c₂ has a V-shaped configuration with a first groove angle α_{G1} and a second groove angle α_{G2}. The first groove angle α_{G1} and the second groove angle α_{G2} are chosen so that an efficient reflection of the incident light from the two light sources 2.1, 2.2 is achieved. In the second light reflection section 3c₂, the first groove angles α_{G1} are ranging from 38° to 39°, and the second groove angles α_{G2} are 40°. The first groove angles α_{G1} are gradually changed between the upper end 3d₂ and the lower end 3e₂ of the second light reflection section 3c₂. A first groove arranged closest to the upper end 3d₂ has a first groove angle α_{G1} of 38°. A last groove arranged closest to the lower end 3e₂ has a first groove angle α_{G1} of 39°. Each groove 7₂ in the second light reflection section 3c₂ has an extension in the downwards direction D along the second light reflection section 3c₂ from the upper end 3d₂ to the lower end 3e₂ of about 1.4 mm.

As illustrated in figure 8, the third light reflection section 3c₃ comprises a third set of grooves 7₃. The third light reflection section 3c₃ is extending from the lower end 3e₂ of the second light reflection section 3c₂ and a distance of about 12.5% of the total extension of the light reflection surface 3c in the downwards direction D towards the lower end 3e of the first light guide 3. Each groove 7₃ in the third light reflection section 3c₃ has a V-shaped configuration with a first groove angle α_{G1} and a second groove angle α_{G2}. The first groove angle α_{G1} and the second groove angle α_{G2} are chosen so that an efficient reflection of the incident light from the two light sources 2.1, 2.2 is achieved. In the third light reflection section 3c₃, the first groove angles α_{G1} are ranging from 39° to 36°, and the second groove angles α_{G2} are 40°. The first groove angles α_{G1} are gradually changed between the upper end 3d₃ and the lower end 3e₃ of the third light reflection section 3c₃. A first groove arranged closest to the upper end 3d₃ has a first groove angle α_{G1} of 39°. A last groove arranged closest to the lower end 3e₃ has a first groove angle α_{G1} of 36°. Each groove 7₃ in the third light reflection section 3c₃ has an extension in the downwards direction D along the third light reflection section 3c₃ from the upper end 3d₃ to the lower end 3e₃ of about 1.1 mm.

As illustrated in figure 8, the fourth light reflection section 3c₄ comprises a fourth set of grooves 7₄. The fourth light reflection section 3c₄ is extending from the lower end 3e₃ of the third light reflection section 3c₃ and a distance of about 12.5% of the total extension of the light reflection surface 3c in the downwards direction D towards the lower end 3e of the first light guide 3. Each groove 7₄ in the fourth light reflection section 3c₄ has a V-shaped configuration with a first groove angle α_{G1} and a second groove angle α_{G2}. The first groove angle α_{G1} and the second groove angle α_{G2} are chosen so that an efficient reflection of the incident light from the two light sources 2.1, 2.2 is achieved. In the fourth light reflection section 3c₄, the first groove angles α_{G1} are ranging from 36° to 37°, and the second groove angles α_{G2} are 40°. The first groove angles α_{G1} are gradually changed between the upper end 3d₄ and the lower end 3e₄ of the fourth light reflection section 3c₄. A first groove arranged closest to the upper end 3d₄ has a first groove angle α_{G1} of 36°. A last groove arranged closest to the lower end 3e₄ has a first groove angle α_{G1} of 37°. Each groove 7₄ in the fourth light reflection section 3c₄ has an extension in the downwards direction D along the fourth light reflection section 3c₄ from the upper end 3d₄ to the lower end 3e₄ of about 1 mm.

As illustrated in figure 8, the fifth light reflection section 3c₅ comprises a fifth set of grooves 7₅. The fifth light reflection section 3c₅ is extending from the lower end 3e₄ of the fourth light reflection section 3c₄ and a distance of about 25% of the total extension of the light reflection surface 3c in the downwards direction D towards the lower end 3e of the first light guide 3. Each groove 7₅ in the fifth light reflection section 3c₅ has a V-shaped configuration with a first groove angle α_{G1} and a second groove angle α_{G2}. The first groove angle α_{G1} and the second groove angle α_{G2} are chosen so that an efficient reflection of the incident light from the two light sources 2.1, 2.2 is achieved. In the fifth light reflection section 3c₅, the first groove angles α_{G1} are 37°, and the second groove angles α_{G2} are 40°. Each groove 7₅ in the fifth light reflection section 3c₅ has an extension in the downwards direction D along the fifth light reflection section 3c₅ from the upper end 3d₅ to the lower end 3e₅ of about 1 mm. The lower end 3e₅ of the fifth light reflection section 3c₅ is corresponding to the lower end 3e of the first light guide 3.

In the example embodiment of the first light guide 3 described above with reference to figure 8, the first light guide 3 is made of polymethyl methacrylate (PMMA). If using other materials, the angles used may be different from the ones described depending on the optical properties and refractive index of the material used.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Vehicle lighting system
- 2:: Light source
- 2a:: Light source centre point
- 3:: First light guide
- 3a:: First light input surface, First light guide
- 3b:: First light output surface, First light guide
- 3c:: Light reflection surface, First light guide
- 3d:: Upper end, First light guide
- 3e:: Lower end, First light guide
- 3f:: Side surface, First light guide
- 3g:: Graining structure, First light guide
- 4:: Second light guide
- 4a:: Second light input surface, Second light guide
- 4b:: Second light output surface, Second light guide
- 4b₁:: First light emitting surface section
- 4b₂:: Second light emitting surface section
- 4c:: Upper surface, Second light guide
- 4d:: Lower surface, Second light guide
- 4e:: Side surface, Second light guide
- 5:: Lens
- 5a:: Lens surface
- 5b:: Lens sidewall
- 5c:: Lens top surface centre point
- 6a:: First prism pattern
- 6b:: Second prism pattern
- 7:: Groove
- 7a:: Upper groove side
- 7b:: Lower groove side
- 7c:: Outer groove connection point

## Claims

1. A vehicle lighting system (1) comprising one or more light sources (2), a first light guide (3), and a second light guide (4),
wherein the one or more light sources (2) are arranged to emit light into the first light guide (3), the first light guide (3) is arranged to emit incident light from the one or more light sources (2) into the second light guide (4), and the second light guide (4) is arranged to emit incident light from the first light guide (3),
wherein the first light guide (3) is arranged to redirect the incident light from the one or more light sources (2) from a first light flow direction (X) to a second light flow direction (Y), and wherein the second light guide (4) is arranged following the first light guide (3) in the second light flow direction (Y),
wherein the first light guide (3) comprises a first light input surface (3a) arranged to receive the incident light from the one or more light sources (2), a first light output surface (3b) arranged to emit the light received from the one or more light sources (2) through the first light input surface (3a), and a light reflection surface (3c) arranged to internally reflecting the incident light from the first light input surface (3a) toward the first light output surface (3b),
wherein the second light guide (4) comprises a second light input surface (4a) arranged to receive the incident light from the first light guide (3), and a second light output surface (4b) arranged to emit the light received through the second light input surface (4a),
wherein the second light output surface (4b) comprises a first light emitting surface section (4b₁) in a first plane (P₁) and a second light emitting surface section (4b₂) in a second plane (P₂), wherein the first plane (P₁) and the second plane (P₂) are arranged at a first angle (α) in relation to each other,
wherein the first angle (α) is in the range 30°<α<180°, preferably 70°<α<160°, and more preferably 110°<α<130°, wherein the first plane (P₁) and the second plane (P₂) are arranged at the first angle (α) in relation to each other about a common axis (A) extending in a direction non-parallel to the second light flow direction (Y),
**characterized in that** the first light guide (3) has a tapered cross-sectional configuration between an upper end (3d) and a lower end (3e), wherein the first light output surface (3b) and the light reflection surface (3c) are extending between the upper end (3d) and the lower end (3e), wherein the first light output surface (3b) is arranged at a second angle (β) in relation to the light reflection surface (3c).

2. A system according to claim 1,
**characterized in that** the first light output surface (3b) is arranged in a light output plane (P_{O}) and the second light input surface (4a) is arranged in a light input plane (P_{I}), wherein a gap (G) is formed between the first light output surface (3b) and the second light input surface (4a).

3. A system according to claim 2,
**characterized in that** the gap (G) has a smallest dimension between the first light output surface (3b) and the second light input surface (4a) in the second light flow direction Y within the range 0.1-20 mm.

4. A system according to claim 2 or 3,
**characterized in that** the light output plane (P_{O}) and the light input plane (P_{I}) are arranged parallel or essentially parallel to each other.

5. A system according to any of claims 2-4,
**characterized in that** the light output plane (P_{O}) and the light input plane (P_{I}) are arranged perpendicular or essentially perpendicular to the second light flow direction (Y).

6. A system according to any of the preceding claims,
**characterized in that** the first light input surface (3a) is arranged at the upper end (3d), and wherein the first light input surface (3a) is arranged at a third angle (γ) in relation to the first light output surface (3b).

7. A system according to claim 6,
**characterized in that** the light reflection surface (3c) comprises a plurality of grooves (7) arranged to redirect the incident light from the one or more light sources (2), wherein the grooves (7) are arranged between the upper end (3d) and the lower end (3e) in a parallel or essentially parallel relationship to the first light input surface (3a).

8. A system according to claim 7,
**characterized in that** each groove (7) has a V-shaped configuration comprising a first groove angle (α_{G1}) and a second groove angle (α_{G2}).

9. A system according to claim 7 or 8,
**characterized in that** the light reflection surface (3c) comprises two or more light reflection sections (3c₁, 3c₂ ... 3c_{N}), wherein the grooves (7) in the respective light reflecting sections have different configurations.

10. A system according to any of the preceding claims,
**characterized in that** the area of the first light output surface (3b) is greater than the area of the second light input surface (4a).

11. A system according to any of the preceding claims,
**characterized in that** the first input surface (3a) comprises one or more lenses (5) arranged to direct the light emitted from the one or more light sources (2) into the first light guide (3), wherein each of the one or more light sources (2) is cooperating with one of the one or more lenses (5).

12. A system according to any of the preceding claims,
**characterized in that** the first light emitting surface section (4b₁) comprises a first prism pattern (6a), and wherein the second light emitting surface section (4b₂) comprises a second prism pattern (6b), wherein the respective first and second prism patterns (6a, 6b) are arranged to direct the light emitted from the second light guide (4).

13. A system according to any of the preceding claims,
**characterized in that** the first light guide (3) is arranged following the one or more light sources (2) in the first light flow direction (X).

14. A system according to any of the preceding claims,
**characterized in that** the first light output surface (3b) comprises a graining structure (3g).

## Patentansprüche

1. Fahrzeugbeleuchtungssystem (1), umfassend eine oder mehrere Lichtquellen (2), einen ersten Lichtleiter (3) und einen zweiten Lichtleiter (4),
wobei die eine oder die mehreren Lichtquellen (2) angeordnet sind, um Licht in den ersten Lichtleiter (3) zu emittieren, der erste Lichtleiter (3) angeordnet ist, um eintreffendes Licht aus der einen oder den mehreren Lichtquellen (2) in den zweiten Lichtleiter (4) zu emittieren, und der zweite Lichtleiter (4) angeordnet ist, um eintreffendes Licht aus dem ersten Lichtleiter (3) zu emittieren,
wobei der erste Lichtleiter (3) angeordnet ist, um das eintreffende Licht aus der einen oder den mehreren Lichtquellen (2) von einer ersten Lichtströmungsrichtung (X) in eine zweite Lichtströmungsrichtung (Y) umzulenken, und wobei der zweite Lichtleiter (4) angeordnet ist, indem er dem ersten Lichtleiter (3) in der zweiten Lichtströmungsrichtung (Y) folgt,
wobei der erste Lichtleiter (3) eine erste Lichteintrittsfläche (3a), die angeordnet ist, um das eintreffende Licht aus der einen oder den mehreren Lichtquellen (2) aufzunehmen, eine erste Lichtaustrittsfläche (3b), die angeordnet ist, um das Licht, das über die erste Lichteintrittsfläche (3a) aus der einen oder den mehreren Lichtquellen (2) aufgenommen wurde, zu emittieren, und eine Lichtreflexionsfläche (3c) umfasst, die angeordnet ist, um das eintreffende Licht aus der ersten Lichteintrittsfläche (3a) in Richtung der ersten Lichtaustrittsfläche (3b) intern zu reflektieren,
wobei der zweite Lichtleiter (4) eine zweite Lichteintrittsfläche (4a), die angeordnet ist, um das eintreffende Licht aus dem ersten Lichtleiter (3) aufzunehmen, und eine zweite Lichtaustrittsfläche (4b) umfasst, die angeordnet ist, um das Licht, das über die zweite Lichteintrittsfläche (4a) aufgenommen wurde, zu emittieren,
wobei die zweite Lichtaustrittsfläche (4b) einen ersten lichtemittierenden Flächenabschnitt (4b₁) in einer ersten Ebene (P₁) und einen zweiten lichtemittierenden Flächenabschnitt (4b₂) in einer zweiten Ebene (P₂) umfasst, wobei die erste Ebene (P₁) und die zweite Ebene (P₂) in einem ersten Winkel (α) relativ zueinander angeordnet sind,
wobei der erste Winkel (α) in dem Bereich von 30°<α<180°, bevorzugt 70°<α<160° und stärker bevorzugt 110°<α<130° liegt, wobei die erste Ebene (P₁) und die zweite Ebene (P₂) in dem ersten Winkel (α) relativ zueinander um eine gemeinsame Achse (A) herum angeordnet sind, die sich in einer Richtung erstreckt, die nicht parallel zu der zweiten Lichtströmungsrichtung (Y) verläuft, **dadurch gekennzeichnet, dass** der erste Lichtleiter (3) eine verjüngte Querschnittskonfiguration zwischen einem oberen Ende (3d) und einem unteren Ende (3e) aufweist, wobei sich die erste Lichtaustrittsfläche (3b) und die Lichtreflexionsfläche (3c) zwischen dem oberen Ende (3d) und dem unteren Ende (3e) erstrecken, wobei die erste Lichtaustrittsfläche (3b) in einem zweiten Winkel (β) relativ zu der Lichtreflexionsfläche (3c) angeordnet ist.

2. System nach Anspruch 1,
**dadurch gekennzeichnet, dass** die erste Lichtaustrittsfläche (3b) in einer Lichtaustrittsebene (P_{O}) angeordnet ist und die zweite Lichtaustrittsfläche (4a) in einer Lichteintrittsebene (P_{I}) angeordnet ist, wobei ein Spalt (G) zwischen der ersten Lichtaustrittsfläche (3b) und der zweiten Lichteintrittsfläche (4a) ausgebildet ist.

3. System nach Anspruch 2,
**dadurch gekennzeichnet, dass** der Spalt (G) eine kleinste Abmessung zwischen der ersten Lichtaustrittsfläche (3b) und der zweiten Lichteintrittsfläche (4a) in der zweiten Lichtströmungsrichtung Y innerhalb des Bereichs von 0,1-20 mm aufweist.

4. System nach Anspruch 2 oder 3,
**dadurch gekennzeichnet, dass** die Lichtaustrittsebene (P_{O}) und die Lichteintrittsebene (P_{I}) parallel oder weitgehend parallel zueinander angeordnet sind.

5. System nach einem der Ansprüche 2-4,
**dadurch gekennzeichnet, dass** die Lichtaustrittsebene (P_{O}) und die Lichteintrittsebene (P_{I}) senkrecht oder weitgehend senkrecht zu der zweiten Lichtströmungsrichtung (Y) angeordnet sind.

6. System nach einem der vorhergehenden Ansprüche, **dadurch gekennzeichnet, dass** die erste Lichteintrittsfläche (3a) an dem oberen Ende (3d) angeordnet ist, und wobei die erste Lichteintrittsfläche (3a) in einem dritten Winkel (γ) relativ zu der ersten Lichtaustrittsfläche (3b) angeordnet ist.

7. System nach Anspruch 6,
**dadurch gekennzeichnet, dass** die Lichtreflexionsfläche (3c) eine Vielzahl von Nuten (7) umfasst, die angeordnet sind, um das eintreffende Licht aus der einen oder den mehreren Lichtquellen (2) umzulenken, wobei die Nuten (7) zwischen dem oberen Ende (3d) und dem unteren Ende (3e) in einer parallelen oder weitgehend parallelen Beziehung zu der ersten Lichteintrittsfläche (3a) angeordnet sind.

8. System nach Anspruch 7,
**dadurch gekennzeichnet, dass** jede Nut (7) eine V-förmige Konfiguration aufweist, die einen ersten Nutwinkel (α_{G1}) und einen zweiten Nutwinkel (α_{G2}) umfasst.

9. System nach Anspruch 7 oder 8,
**dadurch gekennzeichnet, dass** die Lichtreflexionsfläche (3_{C}) zwei oder mehr Lichtreflexionsabschnitte (3_{C1}, 3_{C2}... 3_{CN}) umfasst, wobei die Nuten (7) in den jeweiligen Lichtreflexionsabschnitten unterschiedliche Konfigurationen aufweisen.

10. System nach einem der vorhergehenden Ansprüche, **dadurch gekennzeichnet, dass** der Bereich der ersten Lichtaustrittsfläche (3b) größer als der Bereich der zweiten Lichteintrittsfläche (4a) ist.

11. System nach einem der vorhergehenden Ansprüche, **dadurch gekennzeichnet, dass** die erste Eintrittsfläche (3a) eine oder mehrere Linsen (5) umfasst, die angeordnet sind, um das Licht, das aus der einen oder den mehreren Lichtquellen (2) in den ersten Lichtleiter (3) emittiert wird, zu lenken, wobei jede der einen oder der mehreren Lichtquellen (2) mit einer der einen oder mehreren Linsen (5) zusammenzuwirken.

12. System nach einem der vorhergehenden Ansprüche, **dadurch gekennzeichnet, dass** der erste lichtemittierende Flächenabschnitt (4b₁) ein erstes Prismenmuster (6a) umfasst, und wobei der zweite lichtemittierende Flächenabschnitt (4b₂) ein zweites Prismenmuster (6b) umfasst, wobei das jeweilige erste und das jeweilige zweite Prismenmuster (6a, 6b) angeordnet sind, um das aus dem zweiten Lichtleiter (4) emittierte Licht zu lenken.

13. System nach einem der vorhergehenden Ansprüche,
**dadurch gekennzeichnet, dass** der erste Lichtleiter (3) angeordnet ist, in dem er der einen oder den mehreren Lichtquellen (2) in der ersten Lichtströmungsrichtung (X) folgt.

14. System nach einem der vorhergehenden Ansprüche,
**dadurch gekennzeichnet, dass** die erste Lichtaustrittsfläche (3b) eine Körnungsstruktur (3g) umfasst.

## Revendications

1. Système d'éclairage de véhicule (1) comprenant au moins une source de lumière (2), un premier guide de lumière (3), et un second guide de lumière (4),
dans lequel ladite au moins une source de lumière (2) est agencée pour émettre de la lumière dans le premier guide de lumière (3), le premier guide de lumière (3) est agencé pour émettre la lumière incidente provenant de ladite au moins une source de lumière (2) dans le second guide de lumière (4), et le second guide de lumière (4) est agencé pour émettre la lumière incidente provenant du premier guide de lumière (3),
dans lequel le premier guide de lumière (3) est agencé pour rediriger la lumière incidente provenant de ladite au moins une source de lumière (2) depuis une première direction de flux lumineux (X) vers une seconde direction de flux lumineux (Y), et dans lequel le second guide de lumière (4) est agencé en aval du premier guide de lumière (3) dans la seconde direction de flux lumineux (Y),
dans lequel le premier guide de lumière (3) comprend une première surface d'entrée de lumière (3a) agencée pour recevoir la lumière incidente provenant de ladite au moins une source de lumière (2), une première surface de sortie de lumière (3b) agencée pour émettre la lumière reçue en provenance de ladite au moins une source de lumière (2) à travers la première surface d'entrée de lumière (3a), et une surface de réflexion de lumière (3c) agencée pour réfléchir de manière interne la lumière incidente provenant de la première surface d'entrée de lumière (3a) vers la première surface de sortie de lumière (3b),
dans lequel le second guide de lumière (4) comprend une seconde surface d'entrée de lumière (4a) agencée pour recevoir la lumière incidente provenant du premier guide de lumière (3), et une seconde surface de sortie de lumière (4b) agencée pour émettre la lumière reçue à travers la seconde surface d'entrée de lumière (4a),
dans lequel la seconde surface de sortie de lumière (4b) comprend une première section de surface d'émission de lumière (4b₁) dans un premier plan (P₁) et une seconde section de surface d'émission de lumière (4b₂) dans un second plan (P₂), dans lequel le premier plan (P₁) et le second plan (P₂) sont agencés selon un premier angle (α) l'un par rapport à l'autre,
dans lequel le premier angle (α) est compris dans la plage de 30°<α<180°, de préférence de 70°<α<160°, et de manière davantage préférée de 110°<α<130°, dans lequel le premier plan (P₁) et le second plan (P₂) sont agencés selon le premier angle (α) l'un par rapport à l'autre autour d'un axe commun (A) s'étendant dans une direction non parallèle à la seconde direction de flux lumineux (Y),
**caractérisé en ce que** le premier guide de lumière (3) présente une configuration à section transversale effilée entre une extrémité supérieure (3d) et une extrémité inférieure (3e), dans lequel la première surface de sortie de lumière (3b) et la surface de réflexion de lumière (3c) s'étendent entre l'extrémité supérieure (3d) et l'extrémité inférieure (3e), dans lequel la première surface de sortie de lumière (3b) est agencée selon un deuxième angle (β) par rapport à la surface de réflexion de lumière (3c).

2. Système selon la revendication 1,
**caractérisé en ce que** la première surface de sortie de lumière (3b) est agencée dans un plan de sortie de lumière (P_{O}) et la seconde surface d'entrée de lumière (4a) est agencée dans un plan d'entrée de lumière (P_{I}), dans lequel un espace (G) est formé entre la première surface de sortie de lumière (3b) et la seconde surface d'entrée de lumière (4a).

3. Système selon la revendication 2,
**caractérisé en ce que** l'espace (G) présente une dimension minimale entre la première surface de sortie de lumière (3b) et la seconde surface d'entrée de lumière (4a) dans la seconde direction de flux lumineux (Y) comprise dans la plage de 0,1 à 20 mm.

4. Système selon la revendication 2 ou 3,
**caractérisé en ce que** le plan de sortie de lumière (P_{O}) et le plan d'entrée de lumière (P_{I}) sont agencés parallèlement ou sensiblement parallèlement l'un à l'autre.

5. Système selon l'une quelconque des revendications 2 à 4,
**caractérisé en ce que** le plan de sortie de lumière (P_{O}) et le plan d'entrée de lumière (P_{I}) sont agencés perpendiculairement ou sensiblement perpendiculairement à la seconde direction de flux lumineux (Y).

6. Système selon l'une quelconque des revendications précédentes,
**caractérisé en ce que** la première surface d'entrée de lumière (3a) est agencée au niveau de l'extrémité supérieure (3d), et dans lequel la première surface d'entrée de lumière (3a) est agencée selon un troisième angle (γ) par rapport à la première surface de sortie de lumière (3b).

7. Système selon la revendication 6,
**caractérisé en ce que** la surface de réflexion de lumière (3c) comprend une pluralité de rainures (7) agencées pour rediriger la lumière incidente provenant de ladite au moins une source de lumière (2), dans lequel les rainures (7) sont agencées entre l'extrémité supérieure (3d) et l'extrémité inférieure (3e) parallèlement ou sensiblement parallèlement à la première surface d'entrée de lumière (3a).

8. Système selon la revendication 7,
**caractérisé en ce que** chaque rainure (7) présente une configuration en forme de V comprenant un premier angle de rainure (α_{G1}) et un second angle de rainure (α_{G2}).

9. Système selon la revendication 7 ou 8,
**caractérisé en ce que** la surface de réflexion de lumière (3_{C}) comprend au moins deux sections de réflexion de lumière (3_{C1}, 3_{C2}... 3_{CN}), dans lequel les rainures (7) des sections de réflexion de lumière respectives présentent des configurations différentes.

10. Système selon l'une quelconque des revendications précédentes,
**caractérisé en ce que** l'aire de la première surface de sortie de lumière (3b) est supérieure à l'aire de la seconde surface d'entrée de lumière (4a).

11. Système selon l'une quelconque des revendications précédentes,
**caractérisé en ce que** la première surface d'entrée de lumière (3a) comprend au moins une lentille (5) agencée pour diriger la lumière émise depuis ladite au moins une source de lumière (2) dans le premier guide de lumière (3), dans lequel chacune de ladite au moins une source de lumière (2) coopère avec l'une de ladite au moins une lentille (5).

12. Système selon l'une quelconque des revendications précédentes,
**caractérisé en ce que** la première section de surface d'émission de lumière (4b₁) comprend un premier motif de prismes (6a), et dans lequel la seconde section de surface d'émission de lumière (4b₂) comprend un second motif de prismes (6b), dans lequel les premier et second motifs de prismes (6a, 6b) respectifs sont agencés pour diriger la lumière émise depuis le second guide de lumière (4).

13. Système selon l'une quelconque des revendications précédentes,
**caractérisé en ce que** le premier guide de lumière (3) est agencé en aval de ladite au moins une source de lumière (2) dans la première direction de flux lumineux (X).

14. Système selon l'une quelconque des revendications précédentes,
**caractérisé en ce que** la première surface de sortie de lumière (3b) comprend une structure grainée (3g).
